# EUROPÄISCHE PATENTANMELDUNG

(11) **EP 2 792 246 A1**
(43) Veröffentlichungstag der Anmeldung: **22.10.2014**
(21) Anmeldenummer: 13164084.9
(22) Anmeldetag: 17.04.2013
(51) Int. Cl.: A23K 1/16, A23L 1/275, C07C 403/24

(54) **Verfahren zur Herstellung einer Astaxanthin-Suspension**

(71) Anmelder: BASF SE, 67056 Ludwigshafen (DE)
(72) Erfinder: Gottschalk, Thomas, 67056 Ludwigshafen (DE); Bohn, Heribert, 67319 Wattenheim (DE); Brands, Mario, 67056 Ludwigshafen (DE); Müller, Frank, 67069 Ludwigshafen (DE); End, Lutz, 69493 Hirschberg (DE); Engel, Robert, 67346 Speyer (DE); Weigl, Bernhard, 68167 Mannheim (DE); Pelletier, Wolf, 76879 Ottershein (DE); Feldthusen Jensen, Jesper, 55268 Nieder-Olm (DE); van Hoogevest, Peter, 67433 Neustadt (DE); Leigh, Matthew Louis Steven, 4054 Basel (CH)
(74) Vertreter: Reitstötter Kinzebach

(57) **Zusammenfassung**

Die vorliegende Erfindung betrifft ölige Astaxanthin (AXT)-Suspensionen mit verbessertem Eigenschaftsprofil, erhältlich durch Vermahlen von AXT-Partikeln in einem als Nahrungs- oder Futtermittelzusatz geeignetem Öl; die Verwendung der auf diese Weise hergestellten öligen AXT-Suspension als Zusatz für Nahrungs- oder Futtermittel sowie Nahrungsergänzungsmittel, sowie derartige Mittel, umfassend die erfindungsgemäß hergestellten öligen AXT-Suspensionen; sowie ein Verfahren zur Modifizierung der AXT-Kristallform mittels Vermahlung von AXT-Partikeln.

## Beschreibung

Die vorliegende Erfindung betrifft ölige Astaxanthin (AXT)-Suspensionen mit verbessertem Eigenschaftsprofil, erhältlich durch Vermahlen von AXT-Partikeln in einem als Nahrungs- oder Futtermittelzusatz geeignetem Öl; die Verwendung der auf diese Weise hergestellten öligen AXT-Suspension als Zusatz für Nahrungs- oder Futtermittel sowie Nahrungsergänzungsmittel, sowie derartige Mittel, umfassend die erfindungsgemäß hergestellten öligen AXT-Suspensionen; sowie ein Verfahren zur Modifizierung der AXT-Kristallform mittels Vermahlung von AXT-Partikeln.

### Hintergrund der Erfindung:

Astaxanthin (AXT) (3,3'-Dihydroxy-β,β-carotin-4,4'-dion) besitzt die Formel 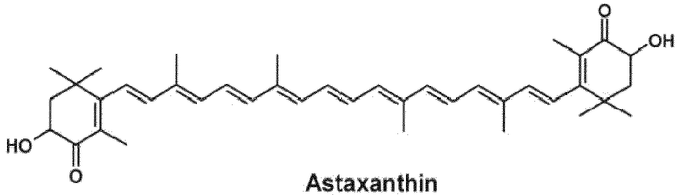 und ist ein natürlich vorkommender Farbstoff, der zur Xanthophyll-Klasse von Carotinoiden zählt. Er ist für die Rotfärbung von Krebstieren verantwortlich und wird industriell aus der Alge *Haematococcus pluvialis* gewonnen oder synthetisch hergestellt. Die natürliche Fleischfarbe von Lachsen geht auf den Astaxanthingehalt der verzehrten Kleinkrebse zurück. Astaxanthin ist strukturell verwandt mit den bekannten Carotinoiden β-Carotin, Zeaxanthin und Lutein. Astaxanthin ist unlöslich in Wasser bei 20 °C und zeigt nur schlechte Löslichkeit in Fetten und Ölen. Synthetisches Astaxanthin hat die CAS-Nummer 7542-45-2 und ist eine 1:2:1-Mischung der Diastereomeren (3S, 3'S), (3R, 3'S) und (3R, 3 'R). Astaxanthin aus natürlichen Quellen isoliert hat die CAS-Nummer 472-61-7 und kann, in Abhängigkeit von der jeweiligen natürlichen Quelle, in nahezu reiner (3S, 3'S) oder (3R, 3'R) Form gefunden werden.

Astaxanthin ist in erster Linie als Futtermittelbestandteil für verschiedene Tiere verwendet, insbesondere für Lachse und Forellen. Astaxanthin wird aber auch als Lebensmittel, Nutriceutical oder kosmetischen Additiv mit antioxidativen Eigenschaften verwendet. Die Anwendung von AXT als Futtermittelzusatz wird durch die schlechte Löslichkeit begrenzt. Um dem entgegenzuwirken, wurde versucht, die Teilchengröße auf weniger als10 µm zu begrenzen und den Gehalt an amorphen AXT-Formen zu erhöhen.

Von besonderem Interesse in der Fischernährung ist, dass Astaxanthin eine vitaminartige Wirkung hat und sich dadurch positiv auf die Fruchtbarkeit und die Immunabwehr der Fische in Zuchtanlagen auswirkt. Bei Fischen bewirkt Astaxanthin, das eine zehnfach stärkere Wirkung als β-Carotin hat, nicht nur eine starke Intensivierung der roten sondern auch der gelben, grünen und blauen Pigmente und eine lachsrote Einfärbung des Fleisches.

Astaxanthin ist als Futtermittelzusatzstoff (E 161j) zum Fischfutter bei der Erzeugung von Speisefischen zugelassen.

Astaxanthin kann die Haut vor dem durch UV-Strahlen ausgelösten Stress schützen und wirkt in dieser Funktion wesentlich stärker als Vitamin E. Astaxanthin ergänzt die Schutzwirkung von Sonnenschutzmitteln und ist nicht abwaschbar.

Grundsätzlich sind Phasenumwandlungen zwischen verschiedenen kristallformen eines Feststoffs während der Mahlung bekannt. Die zugrundeliegenden Mechanismen sind aber wenig verstanden und der Fachmann kann Auftreten, Art und Richtung der Phasenumwandlung nicht ohne weiteres vorhersagen.

Für AXT-Mahlungen sind derartige Phasenumwandlungen bisher nicht beschrieben worden. Es ist jedoch bekannt, dass man Phasenumwandlungen von Astaxanthin durch langsames Erhitzen einer Suspension auf eine Temperatur von 224°C erhalten kann. Dies dauert etwa 3-5 Tage (vgl. Ulrich, Chemical Engineering Research and Design 88 (2010) 1648-1652).

Eine Astaxanthin-Suspension in Öl ist beispielsweise beschrieben in der WO 96/23420. Das einzige dortige Ausführungsbeispiel beschreibt ein Herstellungsverfahren wobei zunächst festes Astaxanthin in einer Fritzen Planetenmühle zerkleinert wird. Die so hergestellten Partikel werden dann in einem Öl suspendiert. Das dort verwendete Öl hat einen Festpunkt von -18°C. Der überwiegende Teil der Partikel weist eine Größe von weniger als 2 µm auf.

Die Herstellung einer speziellen Astaxanthin-Kristallform, welche in essbaren Ölen, wie Sojaöl eine wesentlich höhere Löslichkeit als andere Kristallformen besitzt, ist aus der WO 2008/097090 bekannt. Die Kristallformen (welche im Folgenden auch als PHAAS I bezeichnet wird), wird hergestellt indem man synthetisches oder aus natürlichen Quellen gewonnenes Astaxanthin aus bestimmten Lösungsmitteln umkristallisiert. Diese Kristallform zeigt dann im Röntgenpulverdiagramm Signale bei 11,0°, 11,6° und 17,3° in der 2-Theta-Auftragung.

Die Herstellung und Charakterisierung zweier unterschiedlicher Kristallformen von Astaxanthin sind in der WO 2007/020057 beschrieben.

Die aus dem Stand der Technik bekannten öligen Astaxanthin-Suspensionen weisen noch immer kein voll zufriedenstellendes Eigenschaftsprofil auf. Insbesondere sind Präparate mit ausreichender thermodynamischer Stabilität nicht in wirtschaftlicher Weise herstellbar.

Aufgabe der Erfindung ist daher die Bereitstellung einer verbesserter Astaxanthin-Suspensionen in Öl. Insbesondere sollte erfindungsgemäße Suspension ein ausgewogenes Eigenschaftsprofil besitzen, wie insbesondere eine hohe AXT Konzentration, gute Kippbarkeit, Sedimentationsstabilität und thermodynamische Stabilität; und gleichzeitig ohne großen Aufwand und in kurzer Zeit herstellbar sein

### Kurzfassung der Erfindung

Erfindungsgemäß wurde überraschend festgestellt, dass das Astaxanthin so in Öl gemahlen werden kann, dass die resultierende Dispersion:
(a) eine nicht zu niedrige AXT-Konzentration hat, die einen wirtschaftlich sinnvollen Einsatz ermöglicht,
(b) deren Viskosität trotzdem nicht zu hoch ist, um noch kippbar zu bleiben.
(c) deren Viskosität nicht zu niedrig ist, so dass Sedimentation vermieden wird.
(d) deren Partikelgröße das anschließende Auflöseverfahren nicht beeinträchtigt und
(e) eine Phasenumwandlung des kristallinen Astaxanthin während der Mahlung erfolgt, so dass sich ein hoher Anteil des eingesetzten kristallinen AXT-Materials von der thermodynamisch weniger stabilen in die thermodynamisch stabilere Form umwandeln.

Der Vorteil einer derartigen Umwandlung besteht darin, dass im Nachgang weniger mit spontaner Umwandlung während der Lagerung der Suspension zu rechnen ist. Liegt die Suspenssion in der thermodynamisch weniger stabilen Form vor, ist dagegen mit Phasenumwandlung zu rechnen. Da das Löseverhalten der Suspension generell von der AXT-Kristallmodifikation abhängig ist, ist seine Kontrolle der Kristallform wichtig, um später stabile Parameter im Auflöseprozess einstellen zu können. Deshalb muss die Suspension stabil sein gegenüber Phasenumwandlung.

Entsprechende technische Lösungen der Aufgabe, nämlich Ölige AXT- Suspensionen und deren Herstellung sind in den beiliegenden Ansprüchen angegeben und werden im Folgenden weiter beschrieben:

### Figurenbeschreibung

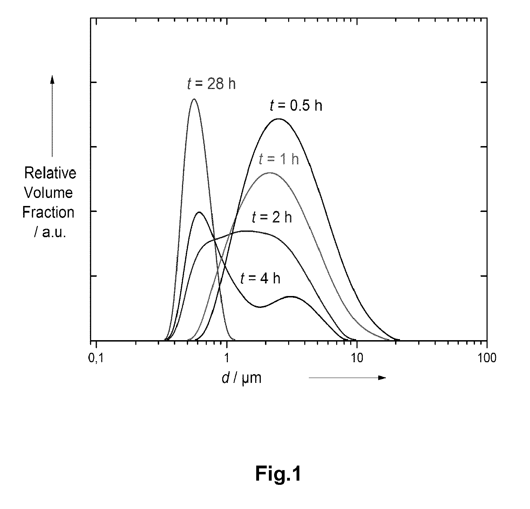

Figur 1 zeigt den Einfluss der Mahldauer auf die Teilchengröße von (5% w / w) öligen Astaxanthin Suspension in Sonnenblumenöl durch quasi-elastische Lichtstreuung gemessen.

### Detaillierte Beschreibung der Erfindung

### a) Definition allgemeiner Begriffe

"Astaxanthin" ((AXT) umfasst all-trans-Astaxanthin (3,3'-Dihydroxy-β,β-carotin-4,4'-dion) zusammen mit nicht mehr als 25 Gew.% an anderen Carotinoid-Verbindungen und oder den cis-Isomeren von Astaxanthin

Die hierin mit PHAAS I bezeichnete Astaxanthin-Kristallform entspricht der aus der WO 2008/087090 bekannten Kristallform oder der aus der WO 2007/020057 dort als Kristallform I bezeichneten Kristallform. Sie ist gekennzeichnet durch die in WO 2007/020057 Tabelle 2 bzw. Tabelle 3 offenbarten Röntgenbeugungsspektren bzw. Raman-Spektren.

Die hierin mit PHAAS II umschriebene Kristallform von Astaxanthin entspricht der mit "Kristallform II" bezeichneten, und in der WO 2007/020057 beschriebenen Kristallform. Sie ist gekennzeichnet durch die dort in Tabelle 4 und Tabelle 5 angegebenen Röntgenbeugungsspektrum bzw. Raman-Spektrum. PHAAS I und PHAAS II unterscheiden sich hinsichtlich Löslichkeit und thermodynamischer Stabilität. PHAAS I besitzt eine verbesserte Öllöslichkeit, wo hingegen PHAAS II eine verbesserte thermodynamische Stabilität besitzt.

Unter dem "d(90)-Wert" versteht man eine Teilchengrößenangabe, die angibt, dass 90% der Teilchen eines Teilchengemischs kleiner sind als der angegebene Wert.

Unter dem "d(50)-Wert" versteht man eine Teilchengrößenangabe, die angibt, dass 50% der Teilchen eines Teilchengemischs kleiner sind als der angegebene Wert.

Die hierin angegebenen Durchmesserwerte (d(x) sind volumetrische Durchmesserwerte jeweils bestimmt durch statische Lichtstreuung; Geeignete Methoden sind Messungen mittels Laserdiffraktometrie, wie z.B. mittels eines Mastersizer 2000 der Firma Malvern Instruments Ltd., GB..

### b) Besondere Ausführungsformen der Erfindung

Die vorliegende Erfindung betrifft folgende besonderen Ausführungsformen:
1. Ölige Astaxanthin (AXT)-Suspension, mit einem AXT Gehalt im Bereich von 1 bis 30, insbesondere 10 bis 20 oder 10 bis 15 Gew.-%, bezogen auf das Gesamtgewicht der Suspension, in einem als Nahrungs- oder Futtermittelzusatz geeigneten Öl, wobei die suspendierten AXT-Teilchen einen d(90) Wert im Bereich von 6 bis 0,1 µm. Typische d(90)-Größenbereiche liegen bei etwa 0,3 bis 5, 0,5 bis 4, 0,6 bis 3,5; oder 1 bis 5, bis 1,5 oder 4,5 oder 2 bis 3,5Beispielsweise sind die Suspensionen bi- oder insbesondere monomodal.
   Nichtlimitierende Beispiele für d(90) Werte sind z.B.: 0,5, 0,6, 0,7, 0,8, 0,9, 1,0, 1,1 oder 1,2 µm; oder 2,8, 2,9, 3,0, 3,1, 3,2, 3,3, 3,4, oder 3,5 µm.
   Zudem können die d(50) Werte der erfindungsgemäßen Suspension im Bereich von etwa 2 µm oder weniger liegen, wie z.B. im Bereich von 2 bis 0,05 µm, oder 0,1 bis 1,8, 0,2 bis 1,6, 0,4 bis 1,4, 0,6 bis 1,2 oder 0,8 bis 1,0 liegen.
   Beispielsweise besitzen derartige spezielle AXT-Suspensionen einen AXT Gehalt im Bereich von 10 bis 20 Gew.-%, bezogen auf das Gesamtgewicht der Suspension und die suspendierten AXT-Teilchen einen d(90) Wert von gleich oder kleiner als 5 µm, wie z.B. 5,0, 4,5, 4,0, 3,5, 3,2, 3,0, 2,0, 1,5, 1,0, 0,8 oder 0,6 µm; oder
   es besitzen derartige spezielle AXT-Suspensionen einen AXT Gehalt im Bereich von 10 bis 15 Gew.-%, bezogen auf das Gesamtgewicht der Suspension und die suspendierten AXT-Teilchen einen d(90) Wert von gleich oder kleiner als 4 µm, wie z.B. 4,0, 3,5, 3,2, 3,0, 2,0, 1,5, 1,0, 0,8 oder 0,6 µm.
   Beispielsweise können AXT-Suspensionen mit eine d(90) Wert von etwa 3,2µm eine d(50) Wert von etwa 1,1µm aufweisen; oder AXT-Suspensionen mit eine d(90) Wert von etwa 3 5 bis 6 µm eine d(50) Wert von etwa 2µm aufweisen.
2. Suspension nach Ausführungsform 1, wobei AXT zumindest teilweise in der thermodynamisch stabilen Kristallform PHAAS II vorliegt.
3. Suspension nach Anspruch 2, wobei AXT eine Mischung die Kristallformen PHAAS I und PHAAS II umfasst.
4. Suspension nach Ausführungsform 3, wobei der Anteil der PHAAS II wenigstens 10, insbesondere wenigstens 30, 40, 50, 60 oder 70 Gew.-%, wie z.B. bis zu 100%, oder bis zu 99, 98, 97, 95, 90, 85 oder 80 Gew.-%der Gesamtmenge von PHAAS I und PHAAS II beträgt. Beispielsweise besitzen derartige spezielle AXT-Suspensionen einen AXT Gehalt im Bereich von 10 bis 20 Gew.-%, bezogen auf das Gesamtgewicht der Suspen-sion und die suspendierten AXT-Teilchen einen d(90) Wert von gleich oder kleiner als 5 µm, wie z.B. 5,0, 4,5, 4,0, 3,5, 3,2, 3,0, 2,0, 1,5, 1,0, 0,8 oder 0,6 µm wobei AXT eine Mischung die Kristallformen PHAAS I und PHAAS II umfasst und der Anteil der PHAAS II wenigstens 50 Gew.-% der Gesamtmenge von PHAAS I und PHAAS II beträgt; oder
   sie besitzen derartige spezielle AXT-Suspensionen einen AXT Gehalt im Bereich von 10 bis 15 Gew.-%, bezogen auf das Gesamtgewicht der Suspension und die suspendierten AXT-Teilchen einen d(90) Wert von gleich oder kleiner als 4 µm, wie z.B. 4,0, 3,5, 3,2, 3,0, 2,0, 1,5, 1,0, 0,8 oder 0,6 µm wobei AXT eine Mischung die Kristallformen PHAAS I und PHAAS II umfasst und der Anteil der PHAAS II wenigstens 70 Gew.-% der Gesamtmenge von PHAAS I und PHAAS II beträgt.
5. Suspension nach einer der vorhergehenden Ausführungsformen, wobei die dynamische Viskosität im Bereich von etwa 50 bis 500 mPas, 100 bis 500 oder 150 bis 400 mPas insbesondere gemessen bei einer Temperatur im Bereich von 5 bis 35°C und Scherraten von etwa 200 s⁻¹, liegt.
   Beispielsweise besitzen derartige spezielle AXT-Suspensionen einen AXT Gehalt im Bereich von 10 bis 20 Gew.-%, bezogen auf das Gesamtgewicht der Suspension und die suspendierten AXT-Teilchen einen d(90) Wert von gleich oder kleiner als 5 µm, wie z.B. 5,0, 4,5, 4,0, 3,5, 3,2, 3,0, 2,0, 1,5, 1,0, 0,8 oder 0,6 µm; wobei AXT eine Mischung die Kristallformen PHAAS I und PHAAS II umfasst und der Anteil der PHAAS II wenigstens 50 Gew.-% der Gesamtmenge von PHAAS I und PHAAS II beträgt; und die dynamische Viskosität im Bereich von etwa 50 bis 400 mPas liegt; oder
   sie besitzen derartige spezielle AXT-Suspensionen einen AXT Gehalt im Bereich von 10 bis 15 Gew.-%, bezogen auf das Gesamtgewicht der Suspension und die suspendierten AXT-Teilchen einen d(90) Wert von gleich oder kleiner als 4 µm, wie z.B. 4,0, 3,5, 3,2, 3,0, 2,0, 1,5, 1,0, 0,8 oder 0,6 µm wobei AXT eine Mischung die Kristallformen PHAAS I und PHAAS II umfasst und der Anteil der PHAAS II wenigstens 70 Gew.-% der Gesamtmenge von PHAAS I und PHAAS II beträgt; und wobei die dynamische m Bereich von etwa 100 bis 350 mPas.
6. Suspension nach einer der vorhergehenden Ausführungsformen, erhältlich durch Vermahlung von AXT, welches zu Beginn der Vermahlung im Wesentlichen in der Kristallformen PHAAS I vorliegt, und insbesondere eine anfängliche Partikelgröße im Bereich von etwa 10 bis 200 µm, wie z.B. 20 bis 100 oder 30 bis 80 µm, aufweist, in einem als Nahrungs- oder Futtermittelzusatz geeigneten Öl.
7. Suspension nach einer der vorhergehenden Ausführungsformen, wobei das Öl ein pflanzliches Öl oder insbesondere ein Fischöl ist.
8. Verfahren zur Herstellung einer öligen Astaxanthin (AXT)-Suspension nach einer der vorhergehenden Ausführungsformen, wobei kristallines AXT, das insbesondere eine anfängliche Partikelgröße im Bereich von etwa 10 bis 200 µm, wie z.B. 20 bis 100 oder 30 bis 80 µm, aufweist, in einem als Nahrungs- oder Futtermittelzusatz geeigneten Öl in einer Mahlvorrichtung, wie insbesondere einer Rührwerksmühle, Kugelmühle, Schwingmühle oder Planetenmühle, bis zum Erreichen einer Partikelgrößenverteilung, entsprechend einem d(90) Wert von gleich oder kleiner als 6, 5 oder 4 µm, insbesondere gleich oder kleiner als 3,2 µm, gleich oder kleiner als 1,5 µm oder gleich kleiner als 0,8 µm aufweisen. Die Untergrenze des d(90) Wertes liegt bei etwa 0,3 oder 0,5 µm Typische dabei erhaltene d(90)-Werte liegen im Bereich von etwa 0,1 bis 4, 0,2 bis 3, 0,3 bis 1,5 oder 0,5 bis 0,8 µm.
9. Verfahren nach Ausführungsform 8, wobei AXT in einen Menge im Bereich von 5 bis 30, insbesondere 10 bis 30 oder 15 bis 25 Gew.-%, bezogen auf das Gesamtgewicht der Suspension dem Öl in einer oder mehreren Portionen zugegeben wird.
10. Verfahren nach einer der Ausführungsformen 8 und 9, wobei wenn Mühlen mit Mahlkörper verwendet werden, die Mahlkörper einen Partikeldurchmesser im Bereich von 0.2-1.4 mm, wie 0.4 - 0.7 mm aufweisen; und /oder der Füllgrad des Mahlbehälters der Mühle im Bereich von 70 bis 95%, insbesondere 80 bis 90 Vol.-% liegt; und/oder
   die Produkt-Temperatur im Bereich von 15 bis 60°C kontrolliert wird (d.h. die Vermahlung bei einer Temperatur im Bereich von 15 bis 60°C erfolgt) und/ oder die Rotorumlaufgeschwindigkeit der Mühle im Bereich von 10 bis 15 m/s liegt,
11. Verfahren nach einer der Ausführungsformen 8 bis 10, wobei die spezifische Mahlenergie im Bereich von 0,1 bis 20 oder 0,5 bis 15 oder 5 bis 10 kWh/kg Feststoff beträgt.
   Spezielle Ausgestaltungen des erfindungsgemäßen Mahlverfahrens sind insbesondere solche, wobei AXT in einen Menge im Bereich von 10 bis 30 oder 15 bis 25 Gew.-%, bezogen auf das Gesamtgewicht der Suspension, eingesetzt wird und die spezifische Mahlenergie im Bereich von 0,5 bis 15 kWh/kg Feststoff liegt;
   oder
   wobei AXT in einen Menge im Bereich von 10 bis 30 oder 15 bis 25 Gew.-%, bezogen auf das Gesamtgewicht der Suspension, eingesetzt wird und die spezifische Mahlenergie im Bereich von 0,5 bis 15 kWh/kg Feststoff liegt; die Vermahlung in einer Rührwerksmühle mit Mahlkörpern erfolgt, wobei die Mahlkörper einen Partikeldurchmesser im Bereich von 0.2-1.4 mm aufweisen; oder
   oder
   wobei AXT in einen Menge im Bereich von 10 bis 30 oder 15 bis 25 Gew.-%, bezogen auf das Gesamtgewicht der Suspension, eingesetzt wird und die spezifische Mahlenergie im Bereich von 0,5 bis 15 kWh/kg Feststoff liegt; die Vermahlung in einer Rührwerksmühle mit Mahlkörpern erfolgt, wobei die Mahlkörper einen Partikeldurchmesser im Bereich von 0.2-1.4 mm aufweisen und der Füllgrad des Mahlbehälters der Mühle im Bereich von 70 bis 95% liegt.
12. Verwendung einer öligen AXT-Suspension nach einer der Ausführungsformen 1 bis 7 oder hergestellt nach einer der Ausführungsformen 8 bis 11 als Nahrungs-oder Futtermittelzusatz, gegebenenfalls im Gemisch mit einem oder mehreren anderen üblichen Nahrungs- oder Futtermittelzusätzen.
13. Nahrungs- oder Futtermittel, umfassend eine ölige AXT-Suspension nach einer der Ausführungsformen 1 bis 7 oder hergestellt nach einer der Ausführungsformen 8 bis 11; oder Nahrungs- oder Futtermittel, hergestellt unter Verwendung eines wässrigen AXT-Lösung, zubereitet aus einer öligen AXT-Suspension nach einer der Ausführungsformen 1 bis 7 oder hergestellt nach einer der Ausführungsformen 8 bis 11.
14. Nahrungsergänzungsmittel, umfassend eine ölige AXT-Suspension nach einer der Ausführungsformen 1 bis 7 oder hergestellt nach einer der Ausführungsformen 8 bis 11; oder Nahrungsergänzungsmittel, hergestellt unter Verwendung eines wässrigen AXT-Lösung, zubereitet aus einer öligen AXT-Suspension nach einer der Ausführungsformen 1 bis 7 oder hergestellt nach einer der Ausführungsformen 8 bis 11.
15. Verfahren zur Überführung der AXT Kristallform PHAAS I in die thermodynamisch stabilere Kristallform PHAAS II, wobei man eine Suspension von AXT Kristallform PHAAS I in einem natürlichen oder synthetischen Öl unter thermisch kontrollierten Bedingungen in einer Mahlvorrichtung, wie insbesondere einer Rührwerksmühle, Kugelmühle, Schwingmühle oder Planetenmühle bis zur zumindest teilweisen Überführung, wie z.B. zu wenigstens 10, insbesondere zu wenigstens 30, 40, 50, 60 oder 70 Gew.-% der Gesamtmenge, der Kristallform PHAAS I in die Kristallform PHAAS II vermahlt.
16. Verfahren nach Ausführungsform 15, wobei die Vermahlung bei einer Temperatur im Bereich von 15 bis 60°C erfolgt.
17. Verfahren nach Ausführungsform 15 oder 16, wobei
   die Mahlkörper der Rührwerkskugelmühle einen Partikeldurchmesser im Bereich von 0,4 bis 1,2 mm, insbesondere 0,2 bis 0,7 mm aufweisen; und /oder
   der Füllgrad des Mahlbehälters der Kugelmühle im Bereich von 70 bis 95%, insbesondere 80 bis 90% liegt; und/oder
   die Produkt-Temperatur im Bereich von 15 bis 60°C kontrolliert wird und/ oder die Rotorumlaufgeschwindigkeit der Kugelmühle im Bereich von 10 bis 15 m/s liegt.

### c) Weitere Ausgestaltungen der Erfindung

### Astaxanthin:

Das zur Herstellung der erfindungsgemäßen Suspension verwendete Astaxanthin-Edukt kann natürlichen oder synthetischen Ursprungs sein. Es is teilchenförmig und hat gewöhnlich eine anfängliche Partikelgröße von 10 bis 200µm.

Es liegt insbesondere vor der Vermahlung in der Kristallform PHAAS I vor, insbesondere zu mindestens 90, 91, 92, 93, 94, 95, 96, 97, 98, 99 oder 100%.

Es kann als Gemisch von Stereoisomeren oder als reines Stereoisomer vorliegen. Es kann als Reinsubstanz oder im Gemisch mit anderen Verbindungen, wie z.B. anderen Carotinoiden, eingesetzt werden.

Beispiele für solche Carotionide sind Carotene wie β-Carotin und Lycopin, sowie Xanthophylle wie Lutein, Astaxanthin, Adonirubin, Adonixanthin, Zeaxanthin, Cryptoxanthin, Citranaxanthin, Canthaxanthin, Echinenon, Bixin, β-Apo-4-carotinal, β-Apo-8-carotinal, β-Apo-4-carotinsäureester, einzeln oder als Mischung.

Sofern Astaxanthin nicht in Reinform zugesetzt wird, wird dieses üblicherweise in einer Reinheit, bezogen auf das all-trans-Isomer (s. obige Strukturformel) von wenigstens 70 Gew.-%, häufig wenigstens 80 Gew.-%, vorzugsweise wenigstens 90 Gew.-% und insbesondere wenigstens 95 Gew.-% eingesetzt. Neben dem all-trans-Isomeren kann das Astaxanthin auch Anteile an cis-Isomeren des Astaxanthins sowie von Astaxanthin verschiedene Stoffe, wie insbesondere Carotinoide enthalten. Der Anteil an von Astaxanthin verschiedenen Carotinoiden wird in der Regel 30 Gew.-%, häufig 20 Gew.-%, insbesondere 10 Gew.-% und besonders bevorzugt 5 Gew.-%, bezogen auf die Gesamtmenge des eingesetzten Carotinoids nicht überschreiten.

Insbesondere verwendet man Astaxanthin, das die an ein für Nahrungsmittel zugelassenes Astaxanthin gestellten Anforderungen erfüllt, d. h. das weniger als 4 Gew.-% Carotinoide, die von Astaxanthin verschieden sind, enthält und das einen Schwermetallgehalt von höchstens 10 ppm aufweist und das zu wenigstens 70 Gew.-%, häufig wenigstens 80 Gew.-%, vorzugsweise wenigstens 90 Gew.-% aus dem all-trans-Isomeren besteht.

### Das für Nahrungs- oder Futtermittel geeignete Öl:

Unter einem für Nahrungs- oder Futtermittel geeigneten Öl versteht man im Sinne der Erfindung ein für die Tier- und/oder Humanernährung zugelassenes Öl. Dieses Öl wird im Folgenden auch als essbares Öl bezeichnet. Das essbare Öl kann synthetischer, mineralischer, pflanzlicher oder tierischer Herkunft sein. Beispiel sind Pflanzenöle wie Sojabohnen-Öl, Palmöl, Palmkernöl, Sonnenblumenöl, Maiskeimöl, Leinsamenöl, Baumwollsaatöl, Tocopherole, Rapsöl, Distelöl, Weizenkeimöl, Reisöl, Kokosöl, Mandelöl, Aprikosenkernöl, Avocadoöl, Jojobaöl, Haselnussöl, Walnussöl, Erdnussöl, Pistazienöl, Triglyceride mittelkettiger (= C₈-C₁₀) Fettsäuren pflanzlichen Ursprungs (sog. MCT-Öle) und PUFA-Öle (PUFA = mehrfach ungesättigte Fettsäuren (polyunsaturated fatty acids) wie Eikosapentaensäure (EPA), Docosahexaensäure (DHA) und a-Linolensäure), weiterhin semisynthetische Triglyceride, z.B. Caprylsäure/Caprinsäure-Tricyceride wie die Miglyol-Typen, weiterhin Oleostearin, Paraffinöl, Glycerylstearat, Isopropylmyristat, Diisopropyladipat, 2-Ethylhexansäureacetylstearylester, flüssige hydrierte Polyisobutene, Squalan, Squalen, weiterhin tierische Öle und Fette wie Schmalz, Talg, Fischöle einschließlich Makrelen-, Sprotten-, Thunfisch-, Heilbutt-, Kabeljau- und Lachsöl sowie kommerzielle Fischölblends wie Südamerikanisches Fischöl, Skandinavisches Fischöl und Menhaden Fischöl, sowie weiterhin Lanolin. Geeignet sind selbstredend auch Mischungen dieser Öle.

Bevorzugt sind insbesondere Pflanzenöle wie Sojabohnen-Öl, Palmöl, Palmkernöl, Sonnenblumenöl, Distelöl, Maiskeimöl, Olivenöl, Leinsamenöl, Rapsöl, Reisöl, Kokosöl, Erdnussöl, PUFA-Öle, MCT-Öle, weiterhin Fischöle, Fischölblends sowie Mischungen dieser Öle, insbesondere Maisöl, Sonnenblumenöl, Sojabohnenöl, Fischöl, Palmkernöl und MCT-Öle.

In einer besonders bevorzugten Ausführungsform der Erfindung umfasst diese Sonnenblumenöl.

Bei den verwendeten Ölen kann es sich um Raffinatöle oder Rohöle handeln, die noch ursprungsspezifische Verunreinigungen wie Proteine, Phosphat, (Erd)alkalimetallsalze und dergleichen in üblichen Mengen enthalten. Die im erfindungsgemäßen Verfahren eingesetzten Öle können auch geringe Mengen an Wasser, vorzugsweise jedoch nicht mehr als 10 Gew.-%, z.B. 0,1 bis 10 Gew.-%, häufig 0,5 bis 8 Gew.-%, bezogen auf das Öl, enthalten. In einer speziellen Ausführungsform der Erfindung enthält das essbare Öl nicht mehr als 0,5 Gew.-%, bezogen auf die Gesamtmenge des eingesetzten essbaren Öls, an Wasser. Derartige Öle weisen typischerweise eine Säurezahl im Bereich von > 2 bis 20 mg KOH/g und eine Neutralisationszahl von 2,5 bis 20 mg KOH/g auf.

### Weitere Zusätze:

Gegebenenfalls können im erfindungsgemäßen Verfahren übliche Mittel zur Stabilisierung von Astaxanthin-Lösungen oder -Suspensionen, wie lipophile Dispergiermittel, Antioxidantien (Oxidationsstabilisatoren) und dergleichen, eingesetzt werden. Diese Mittel können vor, während oder nach der Bereitstellung der Suspension zugeführt werden.

Beispiele für Antioxidantien sind Tocopherole wie α-Tocopherol, α-Tocopherolpalmitat, α-Tocopherolacetat, tert.Butylhydroxytoluol, tert.-Butylhyhydrochinon, tert.-Butylhydroxyanisol, Ascorbinsäure, ihre Salze und Ester, z.B. Natriumascorbat, Calciumascorbat, Ascorbylphosphatester, und Ethoxyquin. Die Antioxidantien werden, sofern erwünscht, typischerweise in Mengen von 0,001 bis 20 Gewichtsteile, bezogen auf 1 Gewichstteil des Carotinoids eingesetzt. Im Falle von Tocopherolen kann eingesetzte Menge an Stabilisator auch höher sein.

Typische lipophile Dispergiermittel sind Ascorbylpalmitat, Polyglycerin-Fettsäureester wie Polyglycerin-3-polyrizinoleat (PGPR90), Sorbitanfettsäureester wie Sorbitanmonostearat (SPAN60), PEG(20)-Sorbitolmonooleat, Propylenglycol-Fettsäureester sowie Phospholipide wie Lecithin. Lipophile Dispergiermittel werden, sofern erwünscht, üblicherweise in Mengen von 0,1 bis 10 Gew.-Teilen, bezogen auf 1 Gew.-Teil des Astaxanthins eingesetzt. In einer bevorzugten Ausführungsform der Erfindung wird kein lipophiles Dispergiermittel eingesetzt.

Weiterhin können der Astaxanthin-Suspension Zuschlagsstoffe zugegeben werden, z.B. Basen wie Ammoniak, basische Aminosäuren oder basischen Adsorbentien, um die Acidität des verwendeten Öls zu erniedrigen und damit eine weitere Erniedrigung des lsomerisierungsgrades zu erreichen, sowie inerte Zusätze wie unlösliche Sulfate der Erdalkalimetalle, die als harte Festkörper die Mahlung beschleunigen und in der Suspension verbleiben können, weil sie physiologisch unbedenklich sind. Insbesondere geeignet sind Alkalimetall- und Erdalkalimetallcarbonate, da sie als Festkörper die Mahlung beschleunigen, in der Suspension verbleiben können, weil sie physiologisch unbedenklich sind, und zudem zur Verminderung der Acidität der verwendeten Öle beitragen.

### Spezielle Herstellungsverfahren:

Die Mahlparameter besonders geeigneter erfindungsgemäßer Fahrweisen für die Vermahlung von AXT sind in Folgenden angegeben::
- Rührwerksmühle, wie z.B. der Fa. Netzsch; TypLMZ 10,
- Rotorumfangsgeschwindigkeit von 12 m/s bis 14 m/s (wie z.B. Drehzahl 1000 U/min)
- 15% bis 20% kristallines Astaxanthin in Sonnenblumenöl.
- Mahlkörper Zirkonoxid (z.B. Jyoti)0.4-0.7 oder 0.3/0.5mm (Füllgrad 90%)
- Durchsatz 600 - 1200 kg/h
- Mahldauer 4h oder mehr, wie z.B. bis 28 h, Kreisfahrweise
- Produkttemperatur Eingang 20-40°C, Ausgang 30-50°C

### Anwendungen auf dem Nahrungs- und Futtermittelsektor

Die nach dem erfindungsgemäßen Verfahren erhältlichen Astaxanthin-Präparate eignen sich in vorteilhafter Weise als Zusatz zu Tierfuttermitteln, Nahrungsmitteln für die Humanernährung, Nahrungsergänzungsmitteln, pharmazeutischen Mitteln oder kosmetischen Mitteln. Bevorzugt lassen sich die Präparate als Futtermittelzusatz in der Tierernährung einsetzen, beispielsweise bei der Futtermittelherstellung durch Einmischen in einen Futtermittelteig vor oder während der Extrusion oder durch Auftragen bzw. Aufsprühen auf Futtermittelpellets. Die Anwendung als Futtermittelzusatz erfolgt insbesondere durch direktes Aufsprühen einer unter Verwendung von einem erfindungsgemäßen Präparat hergestellten Lösung, insbesondere öligen Lösung, beispielsweise als so genannte "post-pelleting liquid application".

Dementsprechend betrifft die vorliegende Erfindung auch die Herstellung von Futtermitteln, wie Tierfuttermittel, Nahrungsmittel für die Humanernährung, Nahrungsergänzungsmittel, sowie die Herstellung pharmazeutischer Mittel oder kosmetischer Mittel. Diese Mittel enthalten neben den für diese Mittel üblichen Bestandteilen das erfindungsgemäße Präparat oder eine daraus hergestellte Lösung.

Bevorzugte Ausführungsformen betreffen Tierfuttermittel, wie insbesondere Fischfuttermittel. Derartige Mittel enthalten Astaxanthin typischerweise in einer Menge von 10 bis 100 ppm, bezogen auf das Gesamtgewicht des Mittels.

Typische weitere Bestandteile in Futtermitteln sind Kohlehydrat-Quellen, insbesondere Getreidemehle wie Weizen- oder Maismehl, Sojabohnenmehl, aber auch Zucker und Zuckeralkohole, weiterhin proteinhaltige Bestandteile wie Sojakonzentrat, Fischmehl, Glutene wie Mais- oder Weizengluten, Öle und Fette, z. B. die zuvor genannten essbaren Öle, aber auch andere essbare Fette pflanzlichen oder tierischen Ursprungs, weiterhin Nutrazeutika wie freie Aminosäuren, deren Salze, Vitamine und Spurenelemente, so-wie gegebenenfalls Verarbeitungshilfsmittel, z. B. Gleitmittel, Antiblockmittel, inerte Füllstoffe und dergleichen, und gegebenenfalls Konservierungsmittel.

Typische Fischfutterzusammensetzungen enthalten z. B. Getreidemehl in einer Menge von beispielsweise 3 bis 20 Gew.-%, Gluten, z. B. in einer Menge von 1 bis 30 Gew.-%, ein oder mehrere Proteinquellen, z. B. Sojakonzentrat und/oder Fischmehl, z. B. in einer Gesamtmenge von 10 bis 50 Gew.-%, Fette und/oder Öle in einer Menge von beispiels-weise 10 bis 50 Gew.-%, gegebenenfalls ein oder mehrere Vitamine in einer Gesamt-menge von beispielsweise 0,1 bis 2 Gew.-% und gegebenenfalls Aminosäuren in einer Menge von beispielsweise 0,1 bis 5 Gew.-%, jeweils bezogen auf die Gesamtmenge der Futtermittelbestandteile.

Eine spezielle Ausführungsform dieser Mittel betrifft Futtermittelpellets, speziell Futtermittelpellets für Fischfutter, die mit der erfindungsgemäß erhältlichen Lösung des Astaxanthins beladen sind. Derartige Pellets enthaltend das Astaxanthin typischerweise in einer Menge von 10 bis 100 ppm, bezogen auf das Gesamtgewicht des Futtermittels. Die Herstellung solcher Pellets erfolgt in der Regel durch Besprühen konventioneller Pellets mit einer erfindungsgemäß erhältlichen Astaxanthin-Lösungen, z.B. unter vermindertem Druck, wobei das Besprühen kontinuierlich oder diskontinuierlich erfolgen kann.

Beispielsweise kann man die konventionellen Pellets in einem geeigneten Gefäß vorlegen, das Gefäß vakuumieren und dann das Astaxanthin-Öl unter Durchmischen der Pellets aufsprühen und anschließend belüften. Auf diese Weise erreicht man ein gleichmäßiges Eindringen der erfindungsgemäßen öligen Zusammensetzung in die Pellets.

### Experimenteller Teil

### Allgemeine Methoden:

### Bestimmung der Teilchengröße:

Die Teilchengrößenverteilung von öliger Astaxanthin Suspension wurde mittels statischer Lichtstreuung (QLS) unter Verwendung eines Malvern Mastersizer 2000 gemessen.

### Bestimmung der Kristallform:

Die Formen können durch Raman-Spektren oder Weitwinkelröntgenstreuung unterschieden werden, wie es in WO08087090 und WO07020057 beschrieben ist.

### Beispiel 1: Mahlung von Astaxanthin in Sonnenblumenöl und Überführung in die Kristallform PHAAS II

Die Naßmahlung von 20 kg Astaxanthin (Kristallform PHAAS I) der BASF SE erfolgte in 15 %iger Suspension in Sonnenblumenöl unter Zugabe von 4 kg Ethoxyquin (Ansatzgröße: 133 kg) mittels einer Rührwerksmühle, Typ Netzsch LMZ 10, in Kreisfahrweise bei einem Mühlendurchsatz von 600 kg/h. Als Mahlperlen kamen Zirkonoxid-Mahlkörper der Größe 0.4/0.7 mm bei einem Mahlkörperfüllgrad von 90 % zum Einsatz. Die Rührerumfangsgeschwindigkeit betrug 12 m/s.

### Bestimmung der Teilchengröße:

Nach einer Mahldauer von 4 h war eine mittlere Partikelgröße von 1.2 um mit 90 % < 3.2 µm erreicht. Gemessen wurde die Partikelgröße mittels Malvern Mastersizer 2000. Die Suspension wurde bei Raumtemperatur eingelagert, um deren Neigung zur Teilchenvergrößerung durch Ostwald-Reifung zu beurteilen. Wie in den gemessenen Teilchengrößenverteilungen nach mehr als einem Jahr Lagerzeit erkennbar ist, bleibt die Teilchengröße der Astaxanthin-Suspensionen konstant.

### Bestimmung der Kristallform:

Durch Weitwinkelröntgenstreuung wurde festgestellt, dass sich 70% des Materials von der Form PHAAS-I in die Form PHAAS-II umgewandelt hatten.

### Bestimmung der Viskosität:

Die Suspension wurde in einem Rheometer zunächst 2 Minuten mit einem Schereintrag von 500 s⁻¹ behandelt und nach 2 Minuten ohne Schereintrag wurde ein Scherzyklus von 0 bis 500 s⁻¹ durchgeführt. Beobachtet wurde, dass die anfängliche Viskosität von über 5 Pas bei Erhöhung des Schereintrags auf etwa 100 s⁻¹ schnell auf Werte von etwa 200 mPas (bei 35°C), 300 mPas (25°C), 600 mPas (10°C) und 800 mPas (5°C) abfällt. Damit übereinstimmend lässt sich die Suspension aus einem Behälter ohne weiteres auskippen und fließt aus dem Gefäß.

### Beispiel 2: Einfluss der Mahldauer auf die Partikelgröße bei Vermahlung Astaxanthin in Sonnenblumenöl

Analog zu Beispiel 1 wurde eine 5 %-ige öligen Astaxanthin Suspension in Sonnenblumenöl vermahlen. Der Einfluss der Mahldauer auf die Partikelgröße (durch quasi-elastische Lichtstreuung gemessen) wurde untersucht. Die Ergebnisse sind in Figur 1 gezeigt.

### Beispiel 3: Untersuchung der Sedimentationsstabilität und Kippbarkeit Astaxanthin/ Sonnenblumenöl Suspension nach Vermahlung

Proben der wurden bei Raumtemperatur im Standzylinder aufgestellt und über 200 Tage beobachtet. Der Quotient aus sedimentiertem Volumen über Gesamtvolumen fiel während dieser Zeit von 1.00 auf 0.89 bzw. 0.99 - in beiden Fällen erfolgt also keine Bodensatzbildung bei Raumtemperatur und in anwendungstypischen Zeiträumen.

Weiterhin wurden die genannten Astaxanthin-Suspensionen über 80 d im Wärmeschrank aufbewahrt. Auch hier spielt Sedimentation auch unter diesen Bedingungen keine Rolle. Ebenfalls wurden nach 20, 40 und 80 Tagen Gehaltsbestimmungen (UV-VIS) durchgeführt und es ergaben sich keine Hinweise auf einen Abbau des Wirkstoffs. Die Partikelgrößeverteilung wurde vor und nach der Lagerung durch statische Lichtstreuung gemessen und die Teilchengrößeverteilung veränderte sich nicht signifikant.

Auf die Offenbarung der hierin zitierten Druckschriften wird ausdrücklich bezuggenommen

## Patentansprüche

1. Ölige Astaxanthin (AXT)-Suspension, mit einem AXT Gehalt im Bereich von 1 bis 30 Gew.-%, bezogen auf das Gesamtgewicht der Suspension, in einem als Nahrungs- oder Futtermittelzusatz geeigneten Öl, wobei die suspendierten AXT-Teilchen einen d(90) Wert im Bereich von 6 bis 0,1 µm aufweisen.

2. Suspension nach Anspruch 1, wobei AXT zumindest teilweise in der thermodynamisch stabilen Kristallform PHAAS II vorliegt.

3. Suspension nach Anspruch 2, wobei AXT eine Mischung die Kristallformen PHAAS I und PHAAS II umfasst.

4. Suspension nach Anspruch 3, wobei der Anteil der PHAAS II wenigstens 10 Gew.-% der Gesamtmenge von PHAAS I und PHAAS II beträgt.

5. Suspension nach einem der vorhergehenden Ansprüche, wobei die dynamische Viskosität im Bereich von etwa 50 bis 500 mPas liegt.

6. Suspension nach einem der vorhergehenden Ansprüche, erhältlich durch Vermahlung von AXT, welches zu Beginn der Vermahlung im Wesentlichen in der Kristallformen PHAAS I vorliegt, in einem als Nahrungs- oder Futtermittelzusatz geeigneten Öl.

7. Suspension nach einem der vorhergehenden Ansprüche, wobei das Öl ein pflanzliches Öl oder Fischöl ist.

8. Verfahren zur Herstellung einer öligen Astaxanthin (AXT)-Suspension nach einem der vorhergehenden Ansprüche, wobei kristallines AXT, in einem als Nahrungs- oder Futtermittelzusatz geeigneten Öl in einer Mahlvorrichtung bis zum Erreichen einer Partikelgrößenverteilung entsprechend einem d(90) Wert von kleiner als 6 µm, vermahlen wird.

9. Verfahren nach Anspruch 8, wobei AXT in einer Menge im Bereich von 5 bis 30 Gew.-%, bezogen auf das Gesamtgewicht der Suspension dem Öl in einer oder mehreren Portionen zugegeben wird.

10. Verfahren nach Anspruch 8 oder 9, wobei
die Mahlkörper der Kugelmühle einen Partikeldurchmesser im Bereich von 0.2-1.4 mm aufweisen; und /oder
der Füllgrad des Mahlbehälters der Kugelmühle im Bereich von 70 bis 95 und/oder
die Produkt-Temperatur im Bereich von 15 bis 60°C kontrolliert wird und/ oder die Rotorumlaufgeschwindigkeit der Kugelmühle im Bereich von 10 bis 15 m/s liegt,

11. Verfahren nach einem der Ansprüche 8 bis 10, wobei die spezifische Mahlenergie 0.1 bis 20 kWh/kg Feststoff beträgt.

12. Verwendung einer öligen AXT-Suspension nach einem der Ansprüche 1 bis 7 oder hergestellt nach einem der Ansprüche 8 bis 11 als Nahrungs- oder Futtermittelzusatz, gegebenenfalls im Gemisch mit einem oder mehreren anderen üblichen Nahrungs- oder Futtermittelzusätzen.

13. Nahrungs- oder Futtermittel, umfassend eine ölige AXT-Suspension nach einem der Ansprüche 1 bis 7 oder hergestellt nach einem der Ansprüche 8 bis 11; oder hergestellt unter Verwendung eines wässrigen AXT-Lösung, zubereitet aus einer öligen AXT-Suspension nach einem der Ansprüche 1 bis 7 oder hergestellt nach einem der Ansprüche 8 bis 11.

14. Nahrungsergänzungsmittel, umfassend eine ölige AXT-Suspension nach einem der Ansprüche 1 bis 7 oder hergestellt nach einem der Ansprüche 8 bis 11; oder hergestellt unter Verwendung eines wässrigen AXT-Lösung, zubereitet aus einer öligen AXT-Suspension nach einem der Ansprüche 1 bis 7 oder hergestellt nach einem der Ansprüche 8 bis 11.

15. Verfahren zur Überführung der AXT Kristallform PHAAS I in die thermodynamisch stabilere Kristallform PHAAS II, wobei eine Suspension von AXT Kristallform PHAAS I in einem natürlichen oder synthetischen Öl unter thermisch kontrollierten Bedingungen in einer Mahlvorrichtung bis zur zumindest teilweisen Überführung der Kristallform PHAAS I in die Kristallform PHAAS II vermahlen wird.

16. Verfahren nach Anspruch 15, wobei die Vermahlung bei einer Temperatur im Bereich von 15 bis 60 °C erfolgt.

17. Verfahren nach Anspruch 15 oder 16, wobei
wenn Mahlkörper beim Vermahlen eingesetzt werden die Mahlkörper einen Partikeldurchmesser im Bereich von 0,4 bis 1,2 mm aufweisen; und /oder der Füllgrad des Mahlbehälters im Bereich von 70 bis 95% liegt; und/oder die Produkt-Temperatur im Bereich von 15 bis 60°C kontrolliert wird und/ oder die Rotorumlaufgeschwindigkeit der Mühle im Bereich von 10 bis 15 m/s liegt.
